# EUROPEAN PATENT SPECIFICATION

(11) **EP 0 588 253 B1**
(45) Date of publication and mention of the grant of the patent: **28.04.1999**
(21) Application number: 93114562.7
(22) Date of filing: 10.09.1993
(51) Int. Cl.: C08L 77/00, C08L 77/02, C08L 77/06

(54) **Polymeric blend with high resistance to fuel**
Polymermischung mit hoher Brennstoffbeständigkeit
Mélange de polymères à haute résistance aux carburants

(30) Priority: 14.09.1992 US 944485
(43) Date of publication of application: 23.03.1994
(73) Proprietor: Nyltech Italia, 20020 Ceriano Laghetto (MI) (IT)
(72) Inventor: Amorese, Michelangelo, I-20159 Milano (IT); Guaita, Cesare, I-21049 Tradate (Varese) (IT); Normandin, Mark, Bow, New Hampshire (US)
(74) Representative: Esson, Jean-Pierre

(56) References cited:
- EP-A- 0 315 451
- EP-A- 0 355 315
- EP-A- 0 355 792
- EP-A- 0 403 109
- EP-A- 0 469 693
- EP-A- 0 583 706

## Description

The present invention relates to a new polymeric blend and to a fuel container and particularly a fuel hose made of this blend.

It is known that nylon 6 and nylon 6,6 cannot be reliably used to make fuel hoses and particularly gasoline hoses because these materials do not withstand dissolving action of ZnCl₂ or CaCl₂ as specified by major automotive industries. It was noted that the lower resistance occurs in the areas in which a hose is bent. In fact the bending causes a local higher mechanical stress which decreases the fuel resistance.

Nylon compounds with a higher carbon atom number, such as nylon 11 and nylon 12 have a better resistance, but they are much more expensive and above all are not flexible without plasticizers. However plasticizers cannot be used because they are extracted by gasoline which is a very good solvent of plasticizers.

Nylon 6,36 is much more flexible, but also this compound has about the same poor fuel resistance as nylon 6.

It is also known that the blending of nylon 6 or nylon 6,6 with other polymeric compounds with the aim of improving flexibility or fuel resistance gives rise to blending problems since the blending compatibility of nylon 6 and nylon 6,6 is very poor.

EP-A-0 583 706 discloses polyamide 6,6 having high impact strength.

An aim of the present invention is therefore that of avoiding the above drawbacks.

Another aim of the present invention is that of improving the notch impact resistance of the blend, particularly at low temperature.

Another aim of the present invention is that of improving the fluxural resistance of the blend.

Another aim of the invention is that of improving the cutting of the blend after extrusion.

According to the present invention, it is hereby surprisingly provided a blend having improved resistance to fuel, comprising:
(a) a copolymer obtainable from copolymerization of ε-caprolactam, and a substance selected from the group consisting of:
   an aminocarboxylic acid having a carbon atom number not lower than 9,
   a lactam corresponding to said aminocarboxylic acid and
   an aminoacid having a carbon atom number not lower than 11 or a mixture of a diamine with a dicarboxylic acid having a carbon atom number of 11 or 36, a weight ratio of said ε-caprolactam with respect to said aminoacid or said diamine plus said dicarboxylic acid being of from 2.65 to 6.60 preferably of from 2.80 to 6.30; and
(b) a polyolefin polymer with functional groups selected from the group consisting of carboxylic groups, esters, anhydrides and carboxylates.

According to a second aspect of the present invention, it is hereby surprisingly provided a blend having improved resistance to fuel, comprising:
(a) a copolymer obtainable from copolymerization of ε-caprolactam, and a substance selected from the group consisting of:
   an aminocarboxylic acid having a carbon atom number not lower than 9,
   a lactam corresponding to said aminocarboxylic acid and
   an aminoacid having a carbon atom number not lower than 11 or a mixture of a diamine with a dicarboxylic acid having a carbon atom number of 11 or 36; said component (a) containing an amount of ε-caprolactam unreacted monomer lower than 4% by weight, preferably lower than 2% by weight, more preferably lower than 1% by weight; and
(b) a polyolefin polymer with functional groups selected from the group consisting of carboxylic groups, esters, anhydrides and carboxylates.

According to a third aspect of the present invention, it is hereby surprisingly provided a process for preparing a blend having improved resistance to fuel, comprising:
(a) a copolymer obtainable from copolymerization of ε-caprolactam, and a substance selected from the group consisting of:
   an aminocarboxylic acid having a carbon atom number not lower than 9,
   a lactam corresponding to said aminocarboxylic acid and
   an aminoacid having a carbon atom number not lower than 11 or a mixture of a diamine with a dicarboxylic acid having a carbon atom number not lower than 9; and
(b) a polyolefin polymer with functional groups selected from the group consisting of carboxylic groups, esters, anhydrides and carboxylates;
said process comprising the following steps:
(i) in which said copolymer (a) and said polyolefin polymer (b) are obtained separately;
(ii) in which unreacted ε-caprolactam monomer is removed from said copolymer (a);
(iii) in which said copolymer (a) and said polyolefin polymer (b) are mixed together.

Preferably a weight ratio of component (a) with respect to component (b) is of from 0.25 to 4 and more preferably said weight ratio is of from 0.65 to 2.5.

Preferably said carbon atom number of the aminocarboxylic acid is is not lower than 10. The carbon number of the dicarboxylic acid is 11 or 36.

Preferably said polyolefin polymer is selected from the group consisting of ethylene acrylic acid copolymer and ethylene acrylic acid ester copolymer.

Preferably said polyolefin polymer is from 0.1% to 20% with respect to the total weight of said blend.

Preferably said ethylene ethyl acrylate is from 5% to 15% with respect to the total weight of said blend.

Preferably said polyolefin polymer is an ionomer, more preferably said ionomer is from 0.1% to 20% with respect to the total weight of said blend, still more preferably said ionomer is from 5% to 15% with respect to the total weight of said blend.

Preferably said polyolefin polymer is ethylene-propylene functionalized with maleic anhydride, more preferably said ethylene-propylene functionalized with maleic anhydride is from 0.1% to 30% with respect to the total weight of said blend, still more preferably said ethylene-propylene functionalized with maleic anhydride is from 5% to 25% with respect to the total weight of said blend.

Preferably the blend according to the invention comprises also nylon 6 in an amount of from 0.1% to 20% with respect to the total weight of said blend, more preferably said amount is of from 0.1% to 7%.

Preferably the blend according to the invention comprises also nylon 12 in an amount of from 0.1% to 40% with respect to the total weight of said blend, more preferably said amount is of from 0.1% to 25% acrylate.

Preferably said polyolefin polymer is ethylene ethyl acrylate.

Preferably said step (ii) is carried out by washing at a temperature of from 80 to 105 °C, preferably of from 90 to 100 °C.

The following examples disclose the invention, but do not have any limitative effect. Parts are intended by weight, unless otherwise specified.

### EXAMPLE 1

The copolymerization conditions for preparing the copolymer which forms component (a) of the blend according to the invention are the following with reference to a dicarboxylic acid having a carbon atom number of 36.

A stoichiometrically balanced solution of hexamethylene diamine and dimer acid in caprolactam is prepared; the weight ratio of hexamethylene diamine to caprolactam being 0.033. 0.47% by weight (based on caprolactam) of azelaic acid is added as molecular weight regulator. 2.0% of water is added.

The solution is copolymerized in a stirred, heated autoclave at atmospheric pressure with a nitrogen purge for 7 hours or until a melt temperature of 250°C is reached.

Pressure is gradually reduced to 100 Torr absolute until the desired viscosity is reached. The preferred relative viscosity is in the range of from 2.5 to 3.5. Viscosity is determined through measurement of agitator speed and hydraulic pressure required to turn agitator.

### EXAMPLE 2

The copolymerization conditions for preparing the copolymer which forms component (a) of the blend according to the invention are the following with reference to a comonomer having a carbon atom number of 11.

A mixture of 1 part aminoundecanoic acid slurry in approximately 5.7 parts of molten caprolactam is prepared.

The mixture is copolymerized in a stirred, heated autoclave at atmospheric pressure with a nitrogen purge for 7 hours or until a melt temperature of 250°C is reached.

Pressure is gradually reduced to 100 Torr absolute until the desired viscosity is reached. Viscosity is determined through measurement of agitator speed and hydraulic pressure required to turn agitator.

### EXAMPLES 3-12

The blend according to the invention is prepared using an Essex single screw extruder with I.D. of 1.5 inch. The screw is a single stage screw with a ratio L/D of 24/1 and compression ratio of 3.5/1. The screw speed is of from 10 to 35 rpm depending on the capability of the compounding equipment.

The screen packs are in sequence from small number of mesh to large number of mesh and particularly 60-120-240-120, etc. The type of extruder, compounding equipment and screw design is flexible, as long as the equipment produces good mixing product.

The temperature in the hopper, extruder and die is in the range of from 233 to 288 °C. The preferred temperature in the hopper is 244 °C. The preferred temperature of the blend at the outlet of the extruder is 266°C. The preferred temperature in the extruder is in the range of 255 to 266°C.

The compositions of examples 3-12 are reported in the table. Particularly the last two lines of the table report the time required for dissolving the final product in ZnCl₂ at respectively 23 and 70°C. The test with ZnCl₂ is important because is particularly reliable to assess the general resistance to fuel, since the behaviour of a polymer with ZnCl₂ is comparable with the behaviour of the same polymer with fuel.

**TABLE I**

| Examples | 3 | 4 | 5 | 6 | 7 | 8 | 9 | 10 | 11 | 12 |
|---|---|---|---|---|---|---|---|---|---|---|
| copolymer: ε-caprolactam, hexamethylenediamine, oleic acid dimer | 65 | 45 | 35 | -- | -- | -- | 100 | --- | --- | --- |
| | | | | | | | | | | |
| copolymer: ε-caprolactam, amine-undecanoic acid | -- | -- | -- | 65 | 45 | 35 | --- | 100 | --- | --- |
| | | | | | | | | | | |
| ethylene ethyl acrylate | 10 | 10 | 10 | 10 | 10 | 10 | --- | --- | --- | --- |
| | | | | | | | | | | |
| ionomer | 10 | 10 | 10 | 10 | 10 | 10 | --- | --- | --- | --- |
| | | | | | | | | | | |
| ethylene-propylene functionalized with maleic anhydride. | 10 | 20 | 15 | 10 | 20 | 15 | --- | --- | --- | --- |
| | | | | | | | | | | |
| nylon 6 | 5 | 5 | 5 | 5 | 5 | 5 | | --- | --- | 100 --- |
| nylon 12 | -- | 10 | 25 | -- | 10 | 25 | 100 --- | --- | --- | 100 |
| stab/additives | 0.2 | -- | 0.2 | 0.2 | -- | 0.2 | --- | --- | --- | |
| | | | | | | | | | | |
| ZnCl₂ 23°C | 1000 hr | 1000 hr | 1000 hr | 1000 hr | 1000 hr | 1000 hr | 25 min | 20 min | 100 5 min | 500 hr |
| | | | | | | | | | | |
| ZnCl₂ 70°C | 200 hr | 170 hr | 200 hr | 200 hr | 170 hr | 200 hr | NA | NA | NA | NA |

### EXAMPLE 13

The copolymerization conditions for preparing the copolymer which forms component (a) of the blend according to the invention are the following with reference to a dicarboxylic acid having a carbon atom number of 36.

8.25 kg of caprolactam, 2.19 kg of dimer acid and 0.582 kg of 85% hexamethylene diamine are mixed together. The weight ratio of ε-caprolactam with respect to hexamethylenediamine plus dicarboxylic acid is 85:15, i.e. 5.6.

The solution is copolymerized in a stirred, heated autoclave maintained at a constant temperature of 265 °C for 10 hours. The autoclave pressure is maintained for the first 2 hours at 2.8 bar of absolute pressure, then for 6 hours the pressure is gradually decreased down to 1.2 bar of absolute pressure, finally for 2 hours the pressure is maintained at 0.52 bar of absolute pressure.

At the end the obtained copolymer is washed with water for 24 hours at a temperature of 100°C to remove the residual caprolactam monomer.

The obtained final physical data of copolymer (a) are the following:
End groups : NH₂ = 50.8 meq/gr; COOH = 50.3
melting point = 215.3 °C
crystallization point = 165.7 °C

The blend according to the invention has the following composition:

| | |
|---|---|
| copolymer (a) | 45% |
| ionomer | 10% |
| ethylene ethyl acrylate | 10% |
| ethylene-propylene functionalized with maleic anhydride. | 20% |
| nylon 12 | 10% |
| stabilizing master | 5% |

in which the stabilizing master is a commercially well known product based on nylon 6 with standard additives.

The blend is prepared using a Werner ZSK 40 single screw extruder. The screw is a single stage screw with a ratio L/D of 32, a flow rate of 32 kg/hour, a turning speed of 220 rpm, and a working temperature of 210-215 °C.

### EXAMPLE 14

The copolymerization conditions for preparing the copolymer which forms component (a) of the blend according to the invention are the same as example 13 except that at the end the obtained copolymer is not washed.

### EXAMPLE 15

The copolymerization conditions for preparing the copolymer which forms component (a) of the blend according to the invention are the same as example 13 except that 8.8 kg of caprolactam, 1.752 kg of dimer acid and 0.466 kg of 85% hexamethylene diamine are mixed together. The weight ratio of ε-caprolactam with respect to hexamethylenediamine plus dicarboxylic acid is 80:20, i.e. 4.

The obtained final physical data of copolymer (a) are the following:
End groups : NH₂ = 82.2 meq/gr; COOH = 21.5
melting point = 213.1 °C
crystallization point = 165.4 °C

### EXAMPLE 16

The copolymerization conditions for preparing the copolymer which forms component (a) of the blend according to the invention are the same as example 13 except that 9.35 kg of caprolactam, 1.314 kg of dimer acid and 0.349 kg of 85% hexamethylene diamine are mixed together. The weight ratio of ε-caprolactam with respect to hexamethylenediamine plus dicarboxylic acid is 75:25, i.e. 3.

The obtained final physical data of copolymer (a) are the following:
End groups : NH₂ = 63.4 meq/gr; COOH = 35.1
melting point = 208.6 °C
crystallization point = 160.4 °C

### EXAMPLE 17

The properties of the blends obtained at the end of examples 13-16 are tested according to ASTM D-256, ASTM D-790 and ZnCl₂ resistance. The results are reported in the table II.

**TABLE II**

| | Notch impact ASTM D-256 (J/m) | | | |
|---|---|---|---|---|
| Example | 14 | 13 | 15 | 16 |
| Temperature | | | | |
| 23 °C | - | - | - | - |
| 0 °C | 183.7 | 1081.7 | 1034.6 | 978.3 |
| -20 °C | 122.2 | 1050.7 | 1018.8 | 969.7 |
| -40 °C | 112.9 | 473.5 | 685.8 | 701.6 |

| | Flexural test ASTM D-790 (N/mm²) | | | |
|---|---|---|---|---|
| Example | 14 | 13 | 15 | 16 |
| modulus | 517.6 | 920.7 | 852.8 | 761 |

| | ZnCl₂ resistance 23°C | | | |
|---|---|---|---|---|
| Example | 14 | 13 | 15 | 16 |
| hours | >1000 | >1000 | >1000 | >1000 |

The results of the above test clearly show very good performances, particularly the notch impact test shows that at 23 °C none of the samples is broken in the conditions set out by ASTM D-256.

The comparison of the results of example 13 and 14 clearly shows a very high improvement of the performances for example 13. This is indeed surprising since the only difference between example 13 and example 14 is that in example 13 the amount of ε-caprolactam unreacted monomer contained in copolymer (a) has been lowered by washing.

Furthermore it has been found that the remotion of ε-caprolactam unreacted monomer dramatically improves the cutting operation after extrusion. So the workability of the blend is also much improved.

## Claims

1. A blend having improved resistance to fuel, comprising:
(a) a copolymer obtainable from copolymerization of ε-caprolactam, and a substance selected from the group consisting of:
an aminocarboxylic acid having a carbon atom number not lower than 9,
a lactam corresponding to said aminocarboxylic acid and
a mixture of a diamine with a dicarboxylic acid having a carbon atom number of 11 or 36, a weight ratio of said ε-caprolactam with respect to said diamine plus said dicarboxylic acid being of from 2.65 to 6.60; and
(b) a polyolefin polymer with functional groups selected from the group consisting of carboxylic groups, esters, anhydrides and carboxylates.

2. A blend according to claim 1 in which said component (a) contains an amount of e-caprolactam unreacted monomer lower than 4% by weight.

3. A blend according to at least one of the preceding claims in which a weight ratio of component (a) with respect to component (b) is of from 0.25 to 4.

4. A blend according to at least one of the preceding claims in which a weight ratio of component (a) with respect to component (b) is of from 0.65 to 2.5.

5. A blend according to at least one of the preceding claims in which a weight ratio of said e-caprolactam with respect to said diamine plus said dicarboxylic acid is of from 2.80 to 6.30.

6. A blend according to at least one of the preceding claims in which said polyolefin polymer is selected from the group consisting of ethylene acrylic acid copolymer and ethylene acrylic acid ester copolymer.

7. A blend according to at least one of the preceding claims in which said polyolefin polymer is from 0.1% to 20% with respect to the total weight of said blend.

8. A blend according to claim 6 in which said ethylene acrylic acid ester is from 5% to 15% with respect to the total weight of said blend.

9. A blend according to at least one of the preceding claims in which said polyolefin polymer is a ionomer.

10. A blend according to claim 9 in which said ionomer is from 0.1% to 20% with respect to the total weight of said blend.

11. A blend according to claim 9 in which said ionomer is from 5% to 15% with respect to the total weight of said blend.

12. A blend according to at least one of the preceding claims in which said polyolefin polymer is ethylene-propylene functionalized with maleic anhydride.

13. A blend according to claim 12 in which said ethylene-propylene functionalized with maleic anhydride is from 0.1% to 30% with respect to the total weight of said blend.

14. A blend according to claim 12 in which said ethylene-propylene functionalized with maleic anhydride is from 5% to 25% with respect to the total weight of said blend.

15. A blend according to at least one of the preceding claims comprising also nylon 6 in an amount of from 0.1% to 20% with respect to the total weight of said blend.

16. A blend according to claim 15 in which said amount is of from 0.1% to 7%.

17. A blend according to at least one of the preceding claims comprising also nylon 12 in an amount of from 0.1% to 40% with respect to the total weight of said blend.

18. A blend according to claim 17 in which said amount is of from 0.1% to 25%.

19. A blend according to at least one of the preceding claims wherein a carbon atom number of said dicarboxylic acid is not lower than 10.

20. A blend according to claim 6 in which said polyolefin polymer is ethylene ethyl acrylate.

21. A blend according to at least one of the preceding claims in which said diamine is hexamethylenediamine or isophoronediamine.

22. A container made of a blend according to at least one of the preceding claims.

23. A fuel container made of a blend according to at least one of the preceding claims.

24. A hose made of a blend according to at least one of the preceding claims.

25. A fuel hose made of a blend according to at least one of the preceding claims.

26. A process for preparing a blend having improved resistance to fuel, comprising:
(a) a copolymer obtainable from copolymerization of ε-caprolactam, and a substance selected from the group consisting of:
an aminocarboxylic acid having a carbon atom number not lower than 9,
a lactam corresponding to said aminocarboxylic acid and
a mixture of a diamine with a dicarboxylic acid having a carbon atom number not lower than 9; and
(b) a polyolefin polymer with functional groups selected from the group consisting of carboxylic groups, esters, anhydrides and carboxylates;
said process comprising the following steps:
(i) in which said copolymer (a) and said polyolefin polymer (b) are obtained separately;
(ii) in which unreacted ε-caprolactam monomer is removed from said copolymer (a);
(iii) in which said copolymer (a) and said polyolefin polymer (b) are mixed together.

27. A process according to claim 25 in which said step (ii) is carried out by washing with water.

28. A process according to claim 25 or 26 in which said step (ii) is carried out by washing at a temperature of from 80 to 105 °C.

29. A process according to at least one of the preceding claims in which said diamine is hexamethylenediamine or isophoronediamine.

30. A process according to claim 28 in which said washing temperature is of from 90 to 100 °C.

31. A blend according to at least one of the preceding claims in which said component (a) contains an amount of ε-caprolactam unreacted monomer lower than 2% by weight.

32. A blend according to at least one of the preceding claims in which said component (a) contains an amount of ε-caprolactam unreacted monomer lower than 1% by weight.

## Patentansprüche

1. Mischung mit verbesserter Widerstandsfähigkeit gegenüber Brennstoff, umfassend:
(a) ein Copolymer, erhältlich durch Copolymerisation von ε-Caprolactam und einer Substanz, ausgewählt aus der Gruppe, bestehend aus:
einer Aminocarbonsäure mit einer Kohlenstoffatomanzahl von nicht weniger als 9,
einem der Aminocarbonsäure entsprechenden Lactam und
einer Mischung eines Diamins mit einer Dicarbonsäure mit einer Kohlenstoffatomanzahl von 11 oder 36, mit einem Gewichtsverhältnis des ε-Caprolactams zum Diamin plus der Dicarbonsäure von 2,65 bis 6,60; sowie
(b) einem Polyolefinpolymer mit funktionellen Gruppen, ausgewählt aus der Gruppe, bestehend aus Carboxylgruppen, Estern, Anhydriden und Carboxylaten.

2. Mischung nach Anspruch 1, in der die Komponente (a) eine Menge an nicht umgesetztem ε-Caprolactam-Monomer von weniger als 4 Gew.-% enthält.

3. Mischung nach mindestens einem der vorhergehenden Ansprüche, in der das Gewichtsverhältnis von Komponente (a) zu Komponente (b) 0,25 bis 4 beträgt.

4. Mischung nach mindestens einem der vorhergehenden Ansprüche, in der das Gewichtsverhältnis von Komponente (a) zu Komponente (b) 0,65 bis 2,5 beträgt.

5. Mischung nach mindestens einem der vorhergehenden Ansprüche, in der das Gewichtsverhältnis des ε-Caprolactams zum Diamin plus der Dicarbonsäure 2,80 bis 6,30 beträgt.

6. Mischung nach mindestens einem der vorhergehenden Ansprüche, in der das Polyolefinpolymer ausgewählt ist aus der Gruppe, bestehend aus Ethylen-Acrylsäure-Copolymer und Ethylen-Acrylsäureester-Copolymer.

7. Mischung nach mindestens einem der vorhergehenden Ansprüche, in der das Polyolefinpolymer 0,1% bis 20%, bezogen auf das Gesamtgewicht der Mischung, beträgt.

8. Mischung nach Anspruch 6, in der der Ethylen-Acrylsäureester 5% bis 15%, bezogen auf das Gesamtgewicht der Mischung, beträgt.

9. Mischung nach mindestens einem der vorhergehenden Ansprüche, in der das Polyolefinpolymer ein Ionomer ist.

10. Mischung nach Anspruch 9, in der das Ionomer 0,1% bis 20%, bezogen auf das Gesamtgewicht der Mischung, beträgt.

11. Mischung nach Anspruch 9, in der das Ionomer 5% bis 15%, bezogen auf das Gesamtgewicht der Mischung, beträgt.

12. Mischung nach mindestens einem der vorhergehenden Ansprüche, in der das Polyolefinpolymer mit Maleinsäureanhydrid funktionalisiertes Ethylen-Propylen ist.

13. Mischung nach Anspruch 12, in der das mit Maleinsäureanhydrid funktionalisierte Ethylen-Propylen 0,1% bis 30%, bezogen auf das Gesamtgewicht der Mischung, beträgt.

14. Mischung nach Anspruch 12, in der das mit Maleinsäureanhydrid funktionalisierte Ethylen-Propylen 5% bis 25%, bezogen auf das Gesamtgewicht der Mischung, beträgt.

15. Mischung nach mindestens einem der vorhergehenden Ansprüche, die ebenfalls Nylon-6 in einer Menge von 0,1% bis 20%, bezogen auf das Gesamtgewicht der Mischung, umfaßt.

16. Mischung nach Anspruch 15, in der die Menge 0,1% bis 7% beträgt.

17. Mischung nach mindestens einem der vorhergehenden Ansprüche, die ebenfalls Nylon-12 in einer Menge von 0,1% bis 40%, bezogen auf das Gesamtgewicht der Mischung, umfaßt.

18. Mischung nach Anspruch 17, in der die Menge 0,1% bis 25% beträgt.

19. Mischung nach mindestens einem der vorhergehenden Ansprüche, in der die Kohlenstoffatomanzahl der Dicarbonsäure nicht kleiner als 10 ist.

20. Mischung nach Anspruch 6, in der das Polyolefinpolymer Ethylen-Ethylacrylat ist.

21. Mischung nach mindestens einem der vorhergehenden Ansprüche, in der das Diamin Hexamethylendiamin oder Isophorondiamin ist.

22. Behälter, hergestellt aus einer Mischung nach mindestens einem der vorhergehenden Ansprüche.

23. Brennstoffbehälter, hergestellt aus einer Mischung nach mindestens einem der vorhergehenden Ansprüche.

24. Leitung, hergestellt aus einer Mischung nach mindestens einem der vorhergehenden Ansprüche.

25. Brennstoffleitung, hergestellt aus einer Mischung nach mindestens einem der vorhergehenden Ansprüche.

26. Verfahren zur Herstellung einer Mischung mit verbesserter Widerstandsfähigkeit gegenüber Brennstoff, umfassend:
(a) ein Copolymer, erhältlich durch Copolymerisation von -Caprolactam und einer Substanz, ausgewählt aus der Gruppe, bestehend aus:
einer Aminocarbonsäure mit einer Kohlenstoffatomanzahl von nicht weniger als 9,
einem der Aminocarbonsäure entsprechenden Lactam und
einer Mischung eines Diamins mit einer Dicarbonsäure mit einer Kohlenstoffatomanzahl von nicht weniger als 9; sowie
(b) einem Polyolefinpolymer mit funktionellen Gruppen, ausgewählt aus der Gruppe, bestehend aus Carboxylgruppen, Estern, Anhydriden und Carboxylaten,
wobei das Verfahren die folgenden Schritte umfaßt:
(i) worin das Copolymer (a) und das Polyolefinpolymer (b) getrennt erhalten werden;
(ii) worin unumgesetztes ε-Caprolactam-Monomer aus dem Copolymer (a) entfernt wird;
(iii) worin das Copolymer (a) und das Polyolefinpolymer (b) zusammengemischt werden.

27. Verfahren nach Anspruch 25, worin der Schritt (ii) durch Waschen mit Wasser ausgeführt wird.

28. Verfahren nach Anspruch 25 oder 26, worin Schritt (ii) durch Waschen bei einer Temperatur von 80 bis 105°C ausgeführt wird.

29. Verfahren nach mindestens einem der vorhergehenden Ansprüche, worin das Diamin Hexamethylendiamin oder Isophorondiamin ist.

30. Verfahren nach Anspruch 28, worin die Waschtemperatur 90 bis 100°C beträgt.

31. Mischung nach mindestens einem der vorhergehenden Ansprüche, in der die Komponente (a) eine Menge an nicht umgesetztem ε-Caprolactam-Monomer von weniger als 2 Gew.-% enthält.

32. Mischung nach mindestens einem der vorhergehenden Ansprüche, in der die Komponente (a) eine Menge an nicht umgesetztem ε-Caprolactam-Monomer von weniger als 1 Gew.-% enthält.

## Revendications

1. Composition de polymères ayant une résistance au fuel améliorée, comprenant :
a) un copolymère pouvant être obtenu par copolymérisation de £-caprolactame et d'un composé choisi dans le groupe consistant en
- un acide amino carboxylique ayant un nombre d'atomes qui n'est pas inférieur à 9,
- un lactame correspondant audit acide aminocarboxylique,
- un mélange d'une diamine avec un acide dicarboxylique ayant un nombre d'atomes de carbone de 11 ou 36, la proportion en poids dudit ε-caprolactame par rapport audit mélange de diamine et d'acide dicarboxylique étant comprise entre 2,65 et 6,60,
et
b) un polymère polyoléfinique comprenant des groupes fonctionnels choisis parmi les groupes carboxyliques, les esters, les anhydrides, les carboxylates.

2. Composition de polymères selon la revendication 1, dans laquelle le composé a) contient une quantité de monomère de E-caprolactame n'ayant pas réagi inférieure de 4 % en poids.

3. Composition de polymères selon l'une des revendications précédentes, dans laquelle le rapport en poids entre les composés a) et b) est compris entre 0,25 et 4.

4. Composition de polymères selon l'une des revendications précédentes, dans laquelle la proportion en poids du composé a) par rapport au composé b) est comprise entre 0,65 et 2,5

5. Composition de polymères selon l'une des revendications précédentes, dans laquelle la proportion en poids dudit E-caprolactame par rapport audit mélange de diamine et d'acide dicarboxylique est comprise entre 2,80 et 6,30.

6. Composition de polymères selon l'une des revendications précédentes, dans laquelle le polymère polyoléfinique est choisi dans le groupe comprenant les copolymères d'acide acrylique éthylène et les copolymères d'ester d'acide acrylique éthylène.

7. Composition de polymères selon l'une des revendications précédentes, dans laquelle le polymère polyoléfinique est en proportion de 0,1 à 20 % par rapport à la masse totale de la composition de polymères.

8. Composition de polymères selon la revendication 6, dans laquelle le coplymère d'ester d'acide acrylique et l'éthylène est en proportion de 5 % à 15 % par rapport à la masse totale de la composition de polymères.

9. Composition de polymères selon l'une des revendications précédentes, dans laquelle le polymère polyoléfinique est un ionomère.

10. Composition de polymères selon la revendication 9, dans laquelle le ionomère est en proportion de 0,1 à 20 % par rapport à la masse totale de la composition de polymères.

11. Composition de polymères selon la revendication 9, dans laquelle le ionomère est en proportion de 5 à 15 % par rapport à la masse totale de la composition de polymères.

12. Composition de polymères selon l'une des revendications précédentes, dans laquelle le polymère polyoléfinique est un éthylène-propylène fonctionnalisé avec un anhydride maléïque.

13. Composition de polymères selon la revendication 12, dans laquelle l'éthylène-propylène fonctionnalisé avec un anhydride maléïque est en proportion de 0,1 à 30 % par rapport à la masse totale de la composition de polymères.

14. Composition de polymères selon la revendication 12, dans laquelle l'éthylène-propylène fonctionnalisé avec un anhydride maléïque est en proportion de 5 à 25 % par rapport à la masse totale de la composition de polymères.

15. Composition de polymères selon l'une des revendications précédentes, caractérisée en ce qu'elle comprend aussi du nylon 6 en proportion de 0,1 % à 20 % par rapport à la masse totale de la composition de polymères.

16. Composition de polymères selon la revendication 15, dans laquelle la proportion de nylon 6 est comprise entre 0,1 % et 7 %.

17. Composition de polymères selon l'une des revendications précédentes, caractérisée en ce qu'elle contient aussi du nylon 12 en proportion de 0,1 % à 40 % par rapport à la masse totale de la composition de polymères.

18. Composition de polymères selon la revendication 17, dans laquelle la proportion de nylon 12 est comprise entre 0,1 % et 25 %.

19. Composition de polymères selon l'une des revendications précédentes, dans laquelle le nombre d'atome de carbone de l'acide di-carboxylique n'est pas inférieur à 10.

20. Composition de polymères selon la revendication 6, dans laquelle le polymère polyoléfinique est un éthylène éthyle acrylate.

21. Composition de polymère selon l'une des revendications précédentes, dans laquelle la diamine est l'hexaméthylène diamine ou l'isophoronediamine.

22. Récipient fabriqué à partir d'une composition de polymères selon l'une des revendications précédentes.

23. Réservoir à fuel fabriqué à partir d'une composition de polymères selon l'une des revendications précédentes.

24. Tuyau fabriqué à partir d'une composition de polymères selon l'une des revendications précédentes.

25. Tuyau pour fuel fabriqué à partir d'une composition de polymères selon l'une des revendications précédentes.

26. Procédé de préparation d'une composition de polymères ayant une résistance au fuel améliorés comprenant :
a) un copolymère pouvant être obtenu par copolymérisation de E-caprolactame et d'un composé choisi dans le groupe consistant en
- un acide amino carboxylique ayant un nombre d'atomes qui n'est pas inférieur à 9,
- un lactame correspondant audit acide aminocarboxylique,
- un mélange d'une diamine avec un diacide carboxylique ayant un nombre d'atomes de carbone qui n'est pas inférieur à 9,
et
b) un polymère polyoléfinique comprenant des groupes fonctionnels choisis parmi les groupes carboxyliques, les esters, les anhydrides, les carboxylates ;
ledit procédé comprenant les étapes suivantes :
(i) le copolymère a) et le polymère polyoléfinique b) sont obtenus séparément ;
(ii) monomère de E-caprolactame n'ayant pas réagi est séparé du copolymère a) ;
(iii) le copolymère a) et le polymère polyoléfinique b) sont mélangés ensembles.

27. Procédé selon la revendication 25 dans lequel l'étape (ii) est réalisée par lavage avec de l'eau.

28. Procédé selon la revendication 25 ou 26 dans lequel l'étape (ii) est réalisé par lavage à une température entre 80 et 105°C.

29. Procédé selon l'une des revendications précédentes dans lequel la diamine est l'hexaméthylène ou l'isophoronediamine.

30. Procédé selon la revendication 28 dans lequel la température de lavage est comprise entre 90 et 100°C.

31. Composition de polymères selon l'une des revendications précédentes dans laquelle le composé a) contient une quantité de monomère de ε-caprolactame n'ayant pas réagi inférieure ou égale à 2 % en poids.

32. Composition de polymères selon l'une des revendications précédentes dans laquelle le composé a) contient une quantité de monomère de E-caprolactame n'ayant pas réagi inférieure ou égale à 1 % en poids.
